# EUROPEAN PATENT APPLICATION

(11) **EP 4 799 746 A1**
(43) Date of publication of application: **02.09.2026**
(21) Application number: 26160702.2
(22) Date of filing: 25.02.2026
(51) Int. Cl.: B22F 9/08, B22F 10/28, B33Y 70/00, C22C 33/00, C22C 33/02, C22C 38/02, C22C 38/12, C22C 38/18, C22C 38/22, C22C 38/32, C22C 38/36, B22F 1/065, B33Y 10/00

(54) **METALLIC GLASS POWDER, ADDITIVELY MANUFACTURED BODY, AND ELECTRONIC DEVICE**

(30) Priority: 27.02.2025 JP 2025029681
(71) Applicant: Seiko Epson Corporation, Tokyo 160-8801 (JP)
(72) Inventor: ENOMOTO, Takuma, Hachinohe-shi 039-1161 (JP); WATANABE, Mayu, Hachinohe-shi 039-1161 (JP); OTSUKA, Isamu, Suwa-shi 392-8502 (JP)
(74) Representative: Lewis Silkin LLP

(57) **Abstract**

A metallic glass powder for use in powder bed fusion type additive manufacturing contains: Cr in a content of 10.0 atomic% or more and 20.0 atomic% or less; Mo in a content of 10.0 atomic% or more and 20.0 atomic% or less; C in a content of 10.0 atomic% or more and 20.0 atomic% or less; B in a content of 5.0 atomic% or more and 15.0 atomic% or less; and P in a content of 0.001 atomic% or more and 0.500 atomic% or less, with a balance being Fe and impurities, in which the metallic glass powder has an amorphous structure, and has a difference between a crystallization temperature Tx and a glass transition temperature Tg of 50°C or more and 80°C or less.

## Description

The present application is based on, and claims priority from JP Application Serial Number 2025-029681, filed February 27, 2025, the disclosure of which is hereby incorporated by reference herein in its entirety.

### BACKGROUND

### 1. Technical Field

The present disclosure relates to a metallic glass powder, an additively manufactured body, and an electronic device.

### 2. Related Art

JP-A-2002-249804 discloses a method of obtaining a three-dimensional object by repeatedly performing a step of spreading a metal powder containing SUS304 as a skeleton metal and Sn as a coating metal to form a powder layer, and a step of irradiating the powder layer with laser light to melt the powder layer to form a bonded portion. According to such a three-dimensional object forming method, an object having high mechanical strength can be produced.

JP-A-2002-249804 is an example of the related art.

The metal powder described in JP-A-2002-249804 contains SUS304 as the skeleton metal. Therefore, there is a problem that hardness of the produced object is not sufficient. When the hardness of the object is low, an exterior component formed of the object is easily scratched.

### SUMMARY

A metallic glass powder according to an application example of the present disclosure is a metallic glass powder for use in powder bed fusion type additive manufacturing, and containing:
Cr in a content of 10.0 atomic% or more and 20.0 atomic% or less;
Mo in a content of 10.0 atomic% or more and 20.0 atomic% or less;
C in a content of 10.0 atomic% or more and 20.0 atomic% or less;
B in a content of 5.0 atomic% or more and 15.0 atomic% or less; and
P in a content of 0.001 atomic% or more and 0.500 atomic% or less,
with a balance being Fe and impurities, in which
the metallic glass powder has an amorphous structure, and has a difference between a crystallization temperature Tx and a glass transition temperature Tg of 50°C or more and 80°C or less.

An additively manufactured body according to an application example of the present disclosure is obtained by subjecting the metallic glass powder according to the application example of the present disclosure to powder bed fusion type additive manufacturing.

An electronic device according to an application example of the present disclosure includes the additively manufactured body according to the application example of the present disclosure.

### BRIEF DESCRIPTION OF THE DRAWINGS

FIG. 1 is an example of a DSC curve obtained for a metallic glass powder according to an embodiment.
FIG. 2 is Table 1 showing compositions and the like of metallic glass powders.
FIG. 3 is Table 2 showing compositions and the like of metallic glass powders or metal powders.
FIG. 4 is Table 3 showing properties of the metallic glass powders and evaluation results for additively manufactured bodies.
FIG. 5 is Table 4 showing properties of the metallic glass powders or the metal powders and evaluation results for additively manufactured bodies.

### DESCRIPTION OF EMBODIMENTS

Hereinafter, a metallic glass powder, an additively manufactured body, and an electronic device according to the present disclosure will be described in detail based on embodiments shown in the accompanying drawings.

### 1. Metallic Glass Powder

The metallic glass powder according to the embodiment is a raw material powder for use in powder bed fusion type additive manufacturing.

A powder bed fusion type additive manufacturing method is a method of obtaining a three-dimensional additively manufactured body by repeating an operation of forming a layer of a raw material powder (powder bed), melting and welding a position corresponding to a cross section of the additively manufactured body to be formed by a heat source, and further forming a layer of the raw material powder thereon. As the heat source, electromagnetic radiation is preferably used, and laser light or an electron beam is more preferably used.

The metallic glass powder according to the embodiment has an amorphous structure, and contains: Cr in a content of 10.0 atomic% or more and 20.0 atomic% or less; Mo in a content of 10.0 atomic% or more and 20.0 atomic% or less; C in a content of 10.0 atomic% or more and 20.0 atomic% or less; B in a content of 5.0 atomic% or more and 15.0 atomic% or less; and P in a content of 0.001 atomic% or more and 0.500 atomic% or less, with the balance being Fe and impurities. In addition, in the metallic glass powder, a difference ΔTx between a crystallization temperature Tx and a glass transition temperature Tg is 50°C or more and 80°C or less.

According to such a configuration, a metallic glass powder capable of producing a non-magnetic additively manufactured body having high hardness and corrosion resistance can be obtained. Then, by subjecting the metallic glass powder to powder bed fusion type additive manufacturing, it is possible to produce an additively manufactured body less likely to be scratched or corroded and having a non-magnetic feature.

### 1.1. Composition

Cr (chromium) is an element that mainly contributes to the corrosion resistance, the high hardness, the non-magnetization, and the like of the metallic glass powder.

The content of Cr is 10.0 atomic% or more and 20.0 atomic% or less, preferably 12.0 atomic% or more and 18.0 atomic% or less, and more preferably 15.0 atomic% or more and 17.0 atomic% or less.

When the content of Cr is smaller than the above lower limit value, the corrosion resistance of the metallic glass powder decreases, and sufficient non-magnetization cannot be achieved. When the content of Cr is larger than the above upper limit value, an amorphous forming ability decreases, and sufficiently high hardness cannot be achieved.

Mo (molybdenum) is an element that contributes to the corrosion resistance, the high hardness, the non-magnetization, and the like of the metallic glass powder by being added together with Cr.

The content of Mo is 10.0 atomic% or more and 20.0 atomic% or less, preferably 12.0 atomic% or more and 18.0 atomic% or less, and more preferably 15.0 atomic% or more and 17.0 atomic% or less.

When the content of Mo is smaller than the above lower limit value, the corrosion resistance of the metallic glass powder decreases, and sufficient non-magnetization cannot be achieved. When the content of Mo is larger than the above upper limit value, an amorphous forming ability decreases, and sufficiently high hardness cannot be achieved.

C (carbon) is an element that enhances the amorphous forming ability of the metallic glass powder by being added together with B (boron).

The content of C is 10.0 atomic% or more and 20.0 atomic% or less, preferably 12.0 atomic% or more and 18.0 atomic% or less, and more preferably 14.0 atomic% or more and 16.0 atomic% or less.

The content of B is 5.0 atomic% or more and 15.0 atomic% or less, preferably 7.0 atomic% or more and 13.0 atomic% or less, and more preferably 9.0 atomic% or more and 11.0 atomic% or less.

When each of the content of C and the content of B is smaller than the above lower limit value, it is difficult to make the metallic glass powder amorphous and nonmagnetic. When each of the content of C and the content of B is larger than the above upper limit value, the corrosion resistance of the metallic glass powder decreases.

P (phosphorus) is an element that enhances the amorphous forming ability of the metallic glass powder by being used in combination with C and B.

The content of P is 0.001 atomic% or more and 0.500 atomic% or less, preferably 0.003 atomic% or more and 0.300 atomic% or less, and more preferably 0.005 atomic% or more and 0.100 atomic% or less.

When the content of P is less than the above lower limit value, the amorphous forming ability decreases, and thus it is difficult to make the metallic glass powder amorphous depending on production conditions of the metallic glass powder such as a cooling rate from a molten metal during the production. This results in insufficient corrosion resistance, high hardness, and the like of the metallic glass powder. When the content of P is larger than the above upper limit value, the corrosion resistance of the metallic glass powder decreases.

The metallic glass powder according to the embodiment may contain Si (silicon). Si is an element that enhances fluidity of the molten metal obtained by melting raw materials of the metallic glass powder. In addition, Si is an element that also contributes to increasing the hardness of the metallic glass powder.

The content of Si is preferably more than 0 atomic% and 1.2 atomic% or less, more preferably 0.1 atomic% or more and 1.2 atomic% or less, still more preferably 0.3 atomic% or more and 1.1 atomic% or less, and particularly preferably 0.5 atomic% or more and 1.0 atomic% or less. When the content of Si is within the above range, meltability of the raw materials can be enhanced, and production efficiency of the metallic glass powder can be enhanced. In addition, a metallic glass powder having high hardness can be obtained.

When the content of Si is smaller than the above lower limit value, the meltability of the raw materials may decrease, and the production efficiency of the metallic glass powder may decrease. In addition, the hardness of the metallic glass powder may decrease. When the content of Si is larger than the above upper limit value, the amorphous forming ability of the metallic glass powder may decrease. In addition, an additively manufactured body produced using the metallic glass powder may be embrittled.

In the metallic glass powder according to the embodiment, the balance other than the above components is Fe (iron) and impurities.

Among them, Fe is a main component of the metallic glass powder and is an element having the highest content in atomic ratio.

The impurities are inevitable impurities mixed into the raw materials or mixed from a production apparatus. The element serving as an impurity is any element other than the above-described elements. A total content of the impurities is preferably 1.0 mass% or less, more preferably 0.2 mass% or less, and still more preferably 0.1 mass% or less. In addition, the content of each element alone as the impurities is preferably 0.2 mass% or less, more preferably 0.1 mass% or less, and still more preferably 0.05 mass% or less. The content of the impurities within this range is allowable since the effects are less likely to be inhibited by impurities.

A content of oxygen in the metallic glass powder is preferably 50 ppm or more and 1,000 ppm or less, more preferably 70 ppm or more and 500 ppm or less, and still more preferably 100 ppm or more and 300 ppm or less. When the content of oxygen is within the above range, occurrence of melting failures derived from a metal oxide can be prevented. Therefore, a metallic glass powder capable of producing an additively manufactured body having high hardness, high corrosion resistance, and high strength can be obtained.

When the content of oxygen in the metallic glass powder is smaller than the above lower limit value, a degree of difficulty in producing the metallic glass powder increases, and storage stability of the metallic glass powder may decrease. When the content of oxygen in the metallic glass powder is larger than the above upper limit value, the occurrence of melting failures of the metallic glass powder may increase.

A content of nitrogen in the metallic glass powder is preferably 50 ppm or more and 1,000 ppm or less, more preferably 70 ppm or more and 500 ppm or less, and still more preferably 100 ppm or more and 400 ppm or less. When the content of nitrogen is within the above range, occurrence of melting failures derived from a metal nitride can be prevented. Therefore, a metallic glass powder capable of producing an additively manufactured body having high hardness, high corrosion resistance, and high strength can be obtained.

When the content of nitrogen in the metallic glass powder is less than the above lower limit value, the degree of difficulty in producing the metallic glass powder increases. When the content of nitrogen in the metallic glass powder is larger than the above upper limit value, the occurrence of melting failures of the metallic glass powder may increase.

The composition of the metallic glass powder is specified by the following analysis method.

Examples of the analysis method include iron and steel-atomic absorption spectrometry defined in JIS G 1257:2000, iron and steel-ICP emission spectrometry defined in JIS G 1258:2007, iron and steel-spark discharge emission spectrometry defined in JIS G 1253:2002, iron and steel-fluorescent X-ray spectrometry defined in JIS G 1256:1997, and gravimetric, titration and absorption spectrometric methods defined in JIS G 1211 to JIS G 1237.

Specifically, examples thereof include a solid-state optical emission spectrometer manufactured by SPECTRO, in particular a spark discharge optical emission spectrometer, model: SPECTROLAB, type: LAVMB08A, and an ICP device CIROS120 manufactured by Rigaku Corporation.

In particular, when specifying carbon (C) and sulfur (S), an infrared absorption method after combustion in a current of oxygen (combustion in high frequency induction furnace) defined in JIS G 1211:2011 is also used. Specifically, an example thereof is a carbon and sulfur analyzer CS-200 manufactured by LECO Corporation.

When specifying nitrogen (N) and oxygen (O), methods for determination of content of nitrogen for an iron and steel defined in JIS G 1228:1997 and general rules for determination of oxygen in metal materials defined in JIS Z 2613:2006 are also used. Specifically, examples thereof include an oxygen and nitrogen analyzer, TC-300/EF-300, manufactured by LECO Corporation.

### 1.2. Metal structure

The metallic glass powder according to the embodiment has an amorphous structure. The metallic glass powder having an amorphous structure can be checked from a spectrum obtained by X-ray diffraction. Specifically, when no sharp diffraction peak is present in the spectrum and a halo peak specific to the amorphous structure can be observed, it can be said that the amorphous structure is present.

By having an amorphous structure, crystal grain boundaries are less likely to be contained inside particles of the metallic glass powder, and thus the hardness, the corrosion resistance, toughness, and the like are favorable. Therefore, by subjecting the metallic glass powder to powder bed fusion type additive manufacturing, it is possible to produce an additively manufactured body less likely to be scratched or corroded and having a non-magnetic feature.

### 1.3. Supercooled Liquid Region

The metallic glass powder according to the embodiment can be subjected to differential scanning calorimeter (DSC) measurement using a DSC to obtain a DSC curve. In the DSC curve, the glass transition temperature Tg and the crystallization temperature Tx of the metallic glass powder are determined. A temperature range of the DSC measurement is from room temperature to 750.0°C. A sample weight is set to 10 mg, and a heating rate is set to 0.67°C/sec.

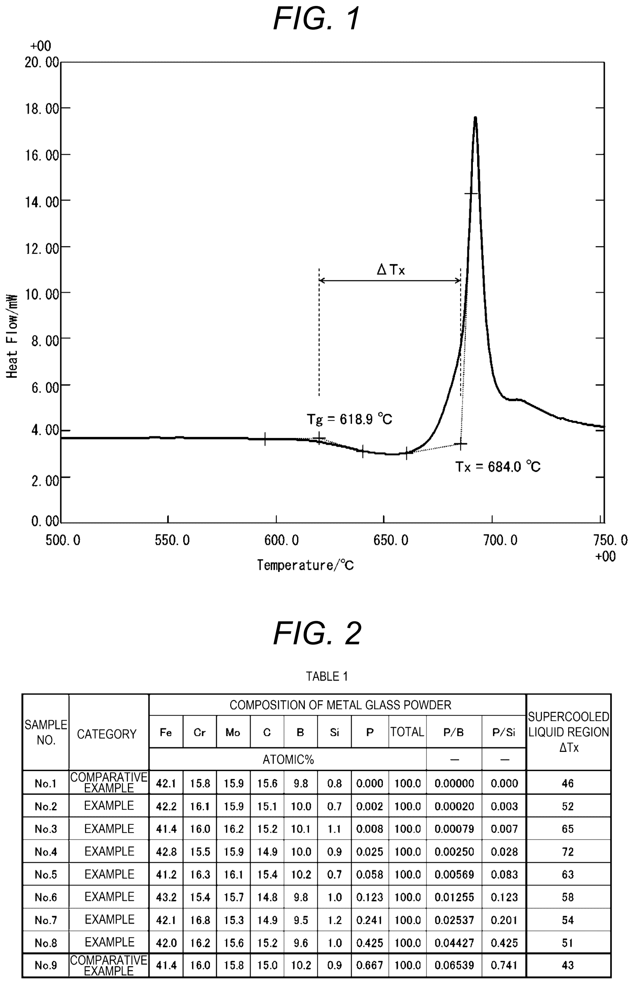

FIG. 1 is an example of a DSC curve obtained for a metallic glass powder according to the embodiment. In FIG. 1, the horizontal axis represents the temperature, and the vertical axis represents a heat flow. The glass transition temperature Tg in the DSC curve shown in FIG. 1 is determined by using a tangential method to be 618.9°C. When the glass transition temperature Tg is to be determined by the using tangential method in this manner, it can be said that the metallic glass powder has an amorphous structure.

In addition, the crystallization temperature Tx in the DSC curve shown in FIG. 1 is determined by the tangential method to be 684.0°C.

A difference between the crystallization temperature Tx and the glass transition temperature Tg obtained as described above is referred to as a "supercooled liquid region ΔTx". The supercooled liquid region ΔTx is an index quantitatively representing the amorphous forming ability of the metallic glass powder, and it can be said that the larger the supercooled liquid region ΔTx, the higher the amorphous forming ability. In the example shown in FIG. 1, the supercooled liquid region ΔTx is 65.1°C.

In the metallic glass powder according to the embodiment, the supercooled liquid region ΔTx is 50°C or more and 80°C or less, preferably 53°C or more and 78°C or less, and more preferably 56°C or more and 75°C or less.

When the supercooled liquid region ΔTx is smaller than the above lower limit value, the amorphous forming ability of the metallic glass powder decreases, and the amorphous structure is not formed or a space factor of the amorphous structure decreases. When the supercooled liquid region ΔTx is larger than the above upper limit value, it is difficult to stably produce the metallic glass powder.

### 1.4. Particle Diameter

In a volume-based cumulative particle size distribution of the metallic glass powder obtained using a laser diffraction particle size distribution analyzer, a particle diameter at which the cumulative frequency is 50% from the small diameter side is defined as D50 (average particle diameter).

The particle diameter D50 of the metallic glass powder is preferably 5.0 µm or more and 40.0 µm or less, more preferably 10.0 µm or more and 35.0 µm or less, and still more preferably 20.0 µm or more and 30.0 µm or less. When the particle diameter D50 of the metallic glass powder is within the above range, the fluidity and a filling property of the metallic glass powder can be enhanced. Accordingly, since the filling property of the powder bed can be enhanced, a high density additively manufactured body can be finally formed. As a result, a high density additively manufactured body having high hardness, high corrosion resistance, and high strength can be obtained.

When the particle diameter D50 of the metallic glass powder is smaller than the above lower limit value, the particle diameter is too small, and thus the fluidity and the filling property of the metallic glass powder may decrease due to aggregation. When the particle diameter D50 is larger than the above upper limit value, the particle diameter is too large, and thus the amorphous forming ability may decrease or the filling property may decrease.

In the volume-based cumulative particle size distribution of the metallic glass powder obtained using a laser diffraction particle size distribution analyzer, a particle diameter at which the cumulative frequency is 10% from the small diameter side is defined as D10, and a particle diameter at which the cumulative frequency is 90% is defined as D90.

A particle diameter ratio D10/D90 of the metallic glass powder represents a measure of how the particle size distribution spreads. The particle diameter ratio D10/D90 of the metallic glass powder is preferably 0.15 or more and 0.32 or less, more preferably 0.17 or more and 0.30 or less, and still more preferably 0.20 or more and 0.28 or less. When the particle diameter ratio D10/D90 is within the above range, the fluidity and the filling property of the metallic glass powder are particularly favorable.

When the particle diameter ratio D10/D90 of the metallic glass powder is smaller than the above lower limit value, the fluidity may decrease. When the particle diameter ratio D10/D90 of the metallic glass powder is larger than the above upper limit value, the filling property may decrease.

### 1.5. Tap Density

A tap density of the metallic glass powder according to the embodiment is preferably 4.3 g/cm³ or more and 5.5 g/cm³ or less, more preferably 4.5 g/cm³ or more and 5.3 g/cm³ or less, and still more preferably 4.8 g/cm³ or more and 5.2 g/cm³ or less. When the tap density is within the above range, the fluidity and the filling property of the metallic glass powder are favorable. Accordingly, since the filling property of the powder bed can be enhanced, a high density additively manufactured body can be finally formed.

The tap density of the metallic glass powder is measured by a powder property evaluation apparatus, Powder Tester (registered trademark) PT-X manufactured by Hosokawa Micron Group. Note that, before the tap density is measured, the metallic glass powder as a measurement target is preferably left to stand in an environment at a temperature of 25°C and a relative humidity of 50% for 1 hour or longer.

### 1.6. Average Circularity

An average circularity of the metallic glass powder according to the embodiment is preferably 0.80 or more and 0.95 or less, more preferably 0.82 or more and 0.94 or less, and still more preferably 0.84 or more and 0.93 or less. When the average circularity is within the above range, the fluidity and the filling property of the metallic glass powder are favorable. Accordingly, since the filling property of the powder bed can be enhanced, a high density additively manufactured body can be finally formed.

The average circularity of the metallic glass powder is obtained as follows.

First, an image (secondary electron image) of the metallic glass powder is taken using a scanning electron microscope (SEM). Next, the obtained image is read into image processing software. As the image processing software, for example, image analysis type particle size distribution measurement software "Mac-View" manufactured by Mountech Co., Ltd. is used. Note that, an imaging magnification is adjusted such that 50 to 100 particles appear in one image. Then, a plurality of images are acquired to obtain images of a total of 300 or more particles.

Next, the circularities of 300 or more particle images are calculated using software. When the circularity is represented by e, the area of a particle image is represented by S, and the perimeter of the particle image is represented by L, the circularity e is determined according to the following equation.$e = 4 πS / {L}^{2}$

Next, an average value of the calculated circularities is determined. The obtained average value is the average circularity of the metallic glass powder.

### 1.7. Hardness

In an additively manufactured body produced by a predetermined method using the metallic glass powder according to the embodiment, Vickers hardness of a cross section is preferably 1,000 or more and 2,000 or less, and more preferably 1,200 or more and 1,500 or less. When the Vickers hardness is within the above range, it is possible to implement an additively manufactured body in which scratches, dents, and the like are less likely to occur.

A method of measuring the hardness is as follows.

First, the metallic glass powder according to the embodiment is subjected to powder bed fusion type additive manufacturing to prepare a cylindrical additively manufactured sample having an outer diameter of 25 mm, an inner diameter of 15 mm, and a length of 20 mm.

Next, the prepared additively manufactured sample is cut along a plane passing through the axis of the cylinder.

Next, the cut surface is subjected to mirror-polishing, and then the hardness is measured by using a micro Vickers hardness tester. The measurement position is the center of the rectangular cut surface. An indentation load of an indenter during the measurement is set to 0.98 N.

### 1.8. Non-magnetic Properties

An annular resin case is filled with the metallic glass powder according to the embodiment, and then an annular solenoid coil is wound around the resin case to form a powder specimen. In addition, an annular solenoid coil is wound around an empty resin case to form an air-core specimen. When an inductance of the powder specimen is defined as L1 and an inductance of the air-core specimen is defined as L0, a ratio L1/L0 of the inductance L1 to the inductance L0 is preferably 1.000 or more and 1.020 or less, and more preferably 1.000 or more and 1.010 or less.

According to such a configuration, a metallic glass powder having a sufficiently small relative permeability and favorable non-magnetic properties can be obtained.

The inductances L0 and L1 are obtained as follows.

First, a resin case is filled with the metallic glass powder. During the filling, sufficient vibration is applied to the resin case until the volume of the metallic glass powder does not change. The resin case is an annular case having an outer diameter of 31.30 mm, an inner diameter of 19.14 mm, a height of 6.98 mm, and a thickness of 1.00 mm.

Next, a copper wire having a wire diameter of 0.7 mm is wound seven times around the resin case filled with the metallic glass powder to form an annular solenoid coil, to prepare a powder specimen.

Next, the inductance of the prepared powder specimen at a frequency of 1 MHz is measured by using an impedance analyzer. The measurement result is defined as the inductance L1 [µH]. As the impedance analyzer, for example, 4294 A manufactured by Keysight Technologies is used. The strength of a magnetic field during the measurement is set to 5 [mOe].

Next, the metallic glass powder is taken out from the resin case, and then a copper wire having a wire diameter of 0.7 mm is wound around the resin case seven times to form an annular solenoid coil, to prepare an air-core specimen.

Next, the inductance of the prepared air-core specimen at a frequency of 1 MHz is measured in the same manner. The measurement result is defined as the inductance L0 [µH].

### 2. Method for Producing Metallic Glass Powder

Next, an example of a method for producing the metallic glass powder will be described.

The metallic glass powder may be produced by any production method, and is produced by using, for example, an atomization method. In the atomization method, a molten metal is caused to flow down from a crucible and collide with a fluid such as a liquid or a gas ejected at a high speed. Accordingly, the cooling rate can be increased, and a metallic glass powder having a favorable amorphous structure can be produced.

Examples of the atomization method include a water atomization method, a gas atomization method, and a rotary water atomization method, depending on a difference in type of a cooling medium and a device configuration.

A flow-down amount of the molten metal varies depending on a device size and the like, and is preferably more than 1.0 kg/min and 20.0 kg/min or less, and more preferably 2.0 kg/min or more and 10.0 kg/min or less. Accordingly, it is possible to optimize an amount of the molten metal flowing down in a certain period of time, so that it is possible to efficiently produce a metallic glass powder having a favorable amorphous structure, sufficient spheroidization, and an optimized particle size distribution.

A temperature (casting temperature) of the molten metal in the crucible is preferably set, with respect to a melting point Tm [°C] of the constituent material of the metallic glass powder, to Tm+100°C or higher and Tm+350°C or lower, more preferably Tm+180°C or higher and Tm+320°C or lower, and still more preferably Tm+250°C or higher and Tm+300°C or lower. Accordingly, it is possible to ensure a time during which the molten metal is present longer than that in the related art when the molten metal is atomized and solidified using various atomization methods. As a result, a metallic glass powder having a high average circularity and favorable fluidity and filling property can be produced.

In various atomization methods, an outer diameter of a fine flow when the molten metal flows down is not particularly limited, and is preferably 3.0 mm or less, more preferably 0.3 mm or more and 2.0 mm or less, and still more preferably 0.5 mm or more and 1.5 mm or less. Accordingly, it is easy to uniformly apply the fluid to the molten metal, so that the cooling rate can be sufficiently ensured, and the spheroidization and the optimization of the particle size distribution can be achieved.

The metallic glass powder thus produced may be classified as necessary. Examples of classification methods include dry classification such as sieving classification, inertial classification, and centrifugal classification, and wet classification such as sedimentation classification.

Further, a particle surface of the produced metallic glass powder may be subjected to a surface treatment. Examples of the surface treatment include a coupling agent treatment.

### 3. Additively Manufactured Body

An additively manufactured body according to the embodiment is produced by subjecting the metallic glass powder according to the embodiment to a powder bed fusion type additive manufacturing method.

The powder bed fusion type additive manufacturing method includes, for example, the following steps.

First, a powder bed is formed using the metallic glass powder. Note that, the powder bed may be formed by using the metallic glass powder alone, or may be formed by using a mixed powder obtained by adding an additive to the metallic glass powder.

Examples of the additive include a non-metal powder, a preservative, an antioxidant, a coupling agent, and an energy absorption accelerator.

Examples of the non-metal powder include an inorganic powder such as a glass powder and a ceramic powder. Examples of a constituent material of the ceramic powder include oxide-based ceramics such as silicon oxide, magnesium oxide, calcium oxide, aluminum oxide, titanium oxide, zirconium oxide, boron oxide, and yttrium oxide, and non-oxide-based ceramics such as silicon nitride, aluminum nitride, boron nitride, titanium nitride, silicon carbide, boron carbide, titanium carbide, and tungsten carbide.

In the formation of the powder bed, for example, the metallic glass powder is leveled using a recoater to form a powder bed having a predetermined thickness.

Next, the powder bed is irradiated with electromagnetic radiation to melt the irradiated metallic glass powder. Accordingly, a melt of the metallic glass powder is formed in a target region.

Next, a new powder bed is formed to cover the powder bed on which the melt of the metallic glass powder is formed. Then, electromagnetic radiation is applied again to form a molten metallic glass powder in a target region.

By repeating the above processes, a three-dimensional additively manufactured body is finally formed. Note that, laser light is preferably used as the electromagnetic radiation. Examples of the laser light include a carbon dioxide laser, a YAG laser, an excimer laser, a He-Cd laser, and a semiconductor-excited solid laser.

The obtained additively manufactured body has high hardness and corrosion resistance, and has a non-magnetic feature. Therefore, the additively manufactured body according to the embodiment is, for example, used in a wide range of applications such as components of electronic devices, electronic components, jewelry, and ornaments.

In addition, the obtained additively manufactured body also has a feature of having a coefficient of thermal expansion smaller than that of other non-magnetic metal materials and the like. Therefore, it is possible to implement a non-magnetic component or the like in which a dimensional change due to a temperature change is prevented.

### 4. Electronic Device

An electronic device according to the embodiment includes the additively manufactured body according to the embodiment described above. Examples of such an electronic device include a portable electronic device and a stationary electronic device that is portable. Among them, by using the additively manufactured body for a housing or the like of a portable electronic device, it is possible to implement a portable electronic device less likely to be scratched or corroded. In addition, since the additively manufactured body is non-magnetic, it is possible to prevent the influence of the magnetic field generated due to electromagnetic waves on an electronic circuit. Accordingly, it is possible to prevent a decrease in performance of the electronic circuit.

Examples of the portable electronic device include a mobile phone, a smartphone, a portable music player, a tablet terminal, a laptop computer, a smart watch, a wearable terminal, and a portable medical device.

### 5. Effects of Embodiment

As described above, the metallic glass powder according to the embodiment is used for a powder bed fusion type additive manufacturing method. The metallic glass powder contains: Cr in a content of 10.0 atomic% or more and 20.0 atomic% or less; Mo in a content of 10.0 atomic% or more and 20.0 atomic% or less; C in a content of 10.0 atomic% or more and 20.0 atomic% or less; B in a content of 5.0 atomic% or more and 15.0 atomic% or less; and P in a content of 0.001 atomic% or more and 0.500 atomic% or less, with the balance being Fe and impurities. In addition, the metallic glass powder according to the embodiment has an amorphous structure, and has a difference between the crystallization temperature Tx and the glass transition temperature Tg of 50°C or more and 80°C or less.

According to such a configuration, a metallic glass powder capable of producing a non-magnetic additively manufactured body having high hardness and corrosion resistance can be obtained. Then, by subjecting the metallic glass powder to powder bed fusion type additive manufacturing, it is possible to produce an additively manufactured body less likely to be scratched or corroded and having a non-magnetic feature.

The metallic glass powder according to the embodiment preferably has a content of Si of 0.1 atomic% or more and 1.2 atomic% or less.

According to such a configuration, the meltability of the raw materials can be enhanced, and the production efficiency of the metallic glass powder can be enhanced. In addition, a metallic glass powder having high hardness can be obtained.

In the metallic glass powder according to the embodiment, when a cylindrical additively manufactured sample having an outer diameter of 25 mm, an inner diameter of 15 mm, and a length of 20 mm is prepared by being subjected to the powder bed fusion type additive manufacturing, Vickers hardness of a cross section of the additively manufactured sample is preferably 1,000 or more and 2,000 or less.

According to such a configuration, it is possible to obtain a metallic glass powder capable of producing an additively manufactured body in which scratches, dents, and the like are less likely to occur.

In the metallic glass powder according to the embodiment, when an annular resin case having an outer diameter of 31.30 mm, an inner diameter of 19.14 mm, a height of 6.98 mm, and a thickness of 1.00 mm is filled with the metallic glass powder, then an annular solenoid coil is wound around the resin case to prepare a powder specimen, the annular solenoid coil is wound around an empty resin case to prepare an air-core specimen, and an inductance of the powder specimen is defined as L1 and an inductance of the air-core specimen is defined as L0, a ratio L1/L0 of the inductance L1 to the inductance L0 is preferably 1.000 or more and 1.020 or less.

According to such a configuration, a metallic glass powder having a sufficiently small relative permeability and favorable non-magnetic properties can be obtained.

The metallic glass powder according to the embodiment preferably has an average particle diameter of 5.0 µm or more and 40.0 µm or less.

According to such a configuration, a metallic glass powder having high fluidity and filling property can be obtained.

The metallic glass powder according to the embodiment preferably has a tap density of 4.3 g/cm³ or more and 5.5 g/cm³ or less.

According to such a configuration, a metallic glass powder having high fluidity and filling property can be obtained.

The metallic glass powder according to the embodiment preferably has an average circularity of 0.80 or more and 0.95 or less.

According to such a configuration, a metallic glass powder having high fluidity and filling property can be obtained.

An additively manufactured body according to the embodiment is produced by subjecting the metallic glass powder according to the embodiment described above to powder bed fusion type additive manufacturing.

According to such a configuration, a non-magnetic additively manufactured body having high hardness and corrosion resistance can be obtained.

An electronic device according to the embodiment includes the additively manufactured body according to the embodiment described above.

According to such a configuration, for example, it is possible to implement a portable electronic device less likely to be scratched or corroded. In addition, since the additively manufactured body is non-magnetic, it is possible to prevent the influence of the magnetic field generated due to electromagnetic waves on an electronic circuit. Accordingly, it is possible to prevent a decrease in performance of the electronic circuit.

Although the metallic glass powder, the additively manufactured body, and the electronic device according to the present disclosure have been described above based on the illustrated embodiment, the present disclosure is not limited thereto, and for example, the metallic glass powder, the additively manufactured body, and the electronic device according to the present disclosure may have any configuration added to the above embodiment.

### Examples

Next, specific examples of the present disclosure will be described.

### 6. Production of Metallic Glass Powder

Powders produced by a rotary water atomization method were subjected to a classification treatment to prepare metallic glass powders in Sample Nos. 1 to 18 and metal powders in Sample Nos. 19 to 21. Various conditions in the rotary water atomization method are as follows.
· Outer diameter of fine flow of molten metal flowing down: 3.0 mm
· Flow-down amount of molten metal: 5.0 kg/min
· Casting temperature: Tm+270°C

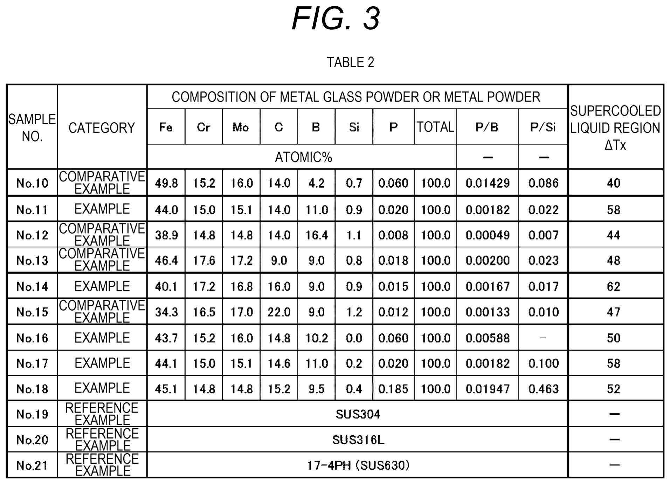

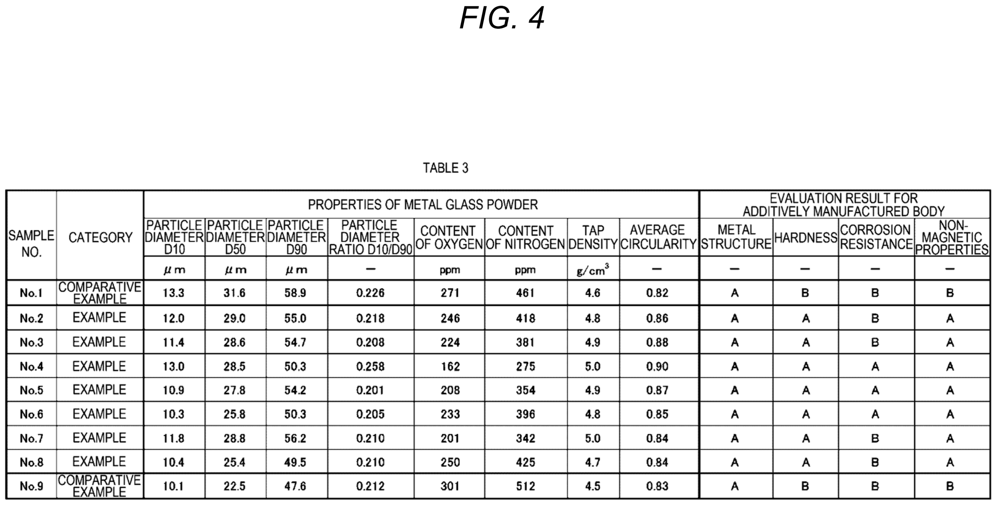

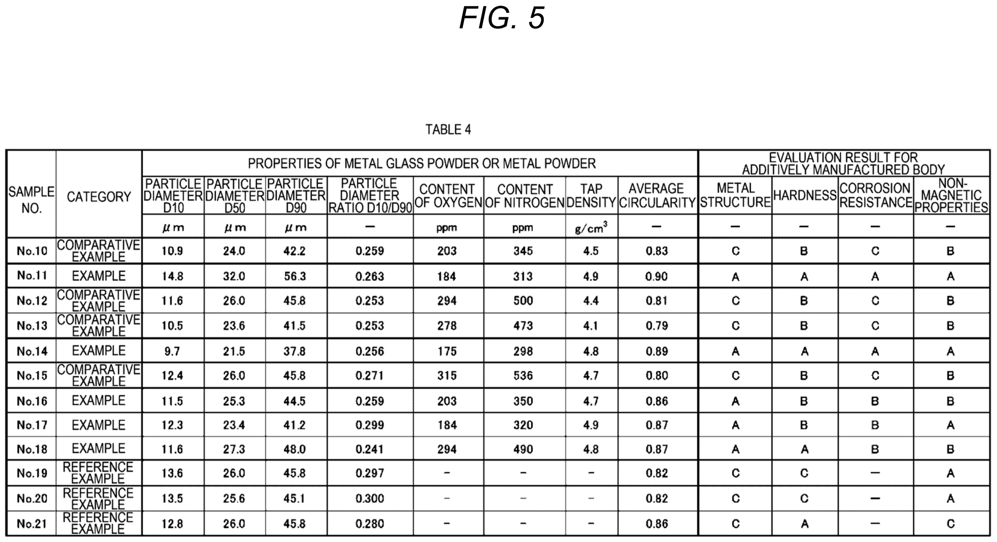

Note that, the configurations of the metallic glass powders and the metal powders in respective Sample Nos. are as shown in Table 1 (FIG. 2) to Table 4 (FIG. 5). FIG. 2 is Table 1 showing compositions and the like of the metallic glass powders. FIG. 3 is Table 2 showing compositions and the like of the metallic glass powders or the metal powders. FIG. 4 is Table 3 showing properties of the metallic glass powders and evaluation results for additively manufactured bodies. FIG. 5 is Table 4 showing properties of the metallic glass powders or the metal powders and evaluation results for additively manufactured bodies.

In addition, the composition of the metallic glass powder or the metal powder and the supercooled liquid region ΔTx of the metallic glass powder are shown in Tables 1 and 2.

Further, as properties of the metallic glass powder or the metal powder, the particle diameters D10, D50, and D90, the particle diameter ratio D10/D90, the content of oxygen, the content of nitrogen, the tap density, and the average circularity are shown in Tables 3 and 4.

In addition, in Tables 2 to 4, among the powders in respective Sample Nos., those corresponding to the present disclosure were each denoted as "Example", and those not corresponding to the present disclosure were each denoted as "Comparative example".

### 7. Evaluation of Additively Manufactured Body

The powder in each Sample No. was subjected to powder bed fusion type additive manufacturing to prepare a cylindrical additively manufactured body for evaluation having an outer diameter of 25 mm, an inner diameter of 15 mm, and a length of 20 mm. Note that, in the additive manufacturing, a mixed powder obtained by adding 0.02 parts by mass of a silica powder to 100 parts by mass of the powder in each Sample No. was used. The particle diameter D50 of the silica powder was 10 nm.

Next, the prepared additively manufactured body for evaluation was evaluated as follows.

### 7.1. Metal Structure

The prepared additively manufactured body for evaluation was subjected to crystal structure analysis by X-ray diffraction. Then, the presence or absence of an amorphous structure was evaluated based on the obtained X-ray diffraction spectrum. As the evaluation results, "A" is shown in the case of having an amorphous structure, and "C" is shown in the case of not having an amorphous structure, which are shown in Tables 3 and 4.

### 7.2. Hardness

The Vickers hardness of the prepared additively manufactured body for evaluation was measured by the method described above. Then, the hardness of the additively manufactured body was evaluated by comparing the measurement results with the following evaluation criteria. The evaluation results are shown in Tables 3 and 4.
A: the Vickers hardness is 1,200 or more and 1,500 or less
B: the Vickers hardness is 1,000 or more and less than 1,200, or more than 1,500 and 2,000 or less
C: the Vickers hardness is less than 1,000 or more than 2,000

### 7.3. Corrosion Resistance

The prepared additively manufactured body for evaluation was subjected to a neutral salt spray test specified in JIS Z 2371: 2015. As the spray liquid, 5% neutral salt water was used, and the test was performed at 35°C for 48 hours. Then, the corrosion resistance of the additively manufactured body was evaluated by comparing the test results with the following evaluation criteria. The evaluation results are shown in Tables 3 and 4.
A: almost no change in appearance
B: a slight change in appearance is observed
C: a large change in appearance

### 7.4. Non-magnetic Properties

For the powder used in the preparation of the additively manufactured body for evaluation, the inductance ratio L1/L0 representing the non-magnetic properties was calculated by the method described above. Then, the non-magnetic properties of the additively manufactured body were alternatively evaluated by comparing the calculation results with the following evaluation criteria. The evaluation results are shown in Tables 3 and 4.
A: the inductance ratio L1/L0 is 1.000 or more and 1.010 or less
B: the inductance ratio L1/L0 is more than 1.010 and 1.020 or less
C: the inductance ratio L1/L0 is more than 1.020

### 7.5. Consideration on Evaluation Results

As seen from Tables 3 and 4, an additively manufactured body having high hardness and corrosion resistance can be produced by using the metallic glass powder in each Example. In addition, it is seen that by using the metallic glass powder in each Example, it is possible to produce an additively manufactured body having non-magnetic properties equivalent to those of non-magnetic stainless steel such as SUS304 or SUS316L.

## Claims

1. A metallic glass powder for use in powder bed fusion type additive manufacturing, the metallic glass powder comprising:
Cr in a content of 10.0 atomic% or more and 20.0 atomic% or less;
Mo in a content of 10.0 atomic% or more and 20.0 atomic% or less;
C in a content of 10.0 atomic% or more and 20.0 atomic% or less;
B in a content of 5.0 atomic% or more and 15.0 atomic% or less; and
P in a content of 0.001 atomic% or more and 0.500 atomic% or less,
with a balance being Fe and impurities, wherein
the metallic glass powder has an amorphous structure, and has a difference between a crystallization temperature Tx and a glass transition temperature Tg of 50°C or more and 80°C or less.

2. The metallic glass powder according to claim 1, wherein a content of Si is 0.1 atomic% or more and 1.2 atomic% or less.

3. The metallic glass powder according to claim 1, wherein
when a cylindrical additively manufactured sample having an outer diameter of 25 mm, an inner diameter of 15 mm, and a length of 20 mm is prepared by being subjected to the powder bed fusion type additive manufacturing, Vickers hardness of a cross section of the additively manufactured sample is 1,000 or more and 2,000 or less.

4. The metallic glass powder according to claim 1, wherein
when an annular resin case having an outer diameter of 31.30 mm, an inner diameter of 19.14 mm, a height of 6.98 mm, and a thickness of 1.00 mm is filled with the metallic glass powder, then an annular solenoid coil is wound around the resin case to prepare a powder specimen, the annular solenoid coil is wound around an empty resin case to prepare an air-core specimen, and an inductance of the powder specimen is defined as L1 and an inductance of the air-core specimen is defined as L0, a ratio L1/L0 of the inductance L1 to the inductance L0 is 1.000 or more and 1.020 or less.

5. The metallic glass powder according to claim 1, which has an average particle diameter of 5.0 µm or more and 40.0 µm or less.

6. The metallic glass powder according to claim 1, which has a tap density of 4.3 g/cm³ or more and 5.5 g/cm³ or less.

7. The metallic glass powder according to claim 1, which has an average circularity of 0.80 or more and 0.95 or less.

8. An additively manufactured body obtained by subjecting the metallic glass powder according to claim 1 to powder bed fusion type additive manufacturing.

9. An electronic device comprising:
the additively manufactured body according to claim 8.
